# EUROPEAN PATENT APPLICATION

(11) **EP 4 806 663 A1**
(43) Date of publication of application: **16.09.2026**
(21) Application number: 26164457.9
(22) Date of filing: 12.03.2026
(51) Int. Cl.: B41J 11/00, B65H 7/14

(54) **PRINTER, PRINTER CONTROL METHOD, AND PROGRAM**

(30) Priority: 14.03.2025 JP 2025041270
(71) Applicant: Seiko Instruments Inc., Chiba-shi, Chiba 261-8507 (JP)
(72) Inventor: ISHIDOYA, Yohei, Chiba-shi, 261-8507 (JP)
(74) Representative: Lewis Silkin LLP

(57) **Abstract**

A printer performs automatic calibration of a sheet-detection sensor by acquiring a measurement voltage and setting a threshold according to predetermined conditions. Sheet presence or absence may be determined based on voltage variation during sheet feeding used for voltage-variation analysis. A registration flag may suppress repeated calibration. This configuration reduces user intervention and allows stable detection regardless of sheet type.

## Description

### BACKGROUND OF THE INVENTION

### 1. Field of the Invention

The disclosure relates to a printer, a printer control method, and a program for automatically calibrating a sheet-detection sensor.

### 2. Description of the Related Art

In thermal printers, a sensor voltage is commonly used to determine sheet presence. Conventional calibration methods typically require manual user operations such as command input or test printing. Furthermore, when sheets with different reflectance, such as environmentally compliant low-reflectance sheets, are used, conventional threshold settings may become inappropriate. As a result, recalibration must be performed frequently.

An objective of the disclosed embodiments is to enable automatic and reliable calibration of a sheet-detection sensor while reducing user intervention and maintaining stable threshold determination across different sheet types.

### SUMMARY OF THE INVENTION

In one aspect, a printer includes a calibration module configured to execute calibration of setting a threshold value for a measurement voltage value of a sensor configured to detect whether a sheet is present or absent; and a condition determination module configured to determine whether a condition for executing the calibration is satisfied, wherein the calibration module is configured to acquire the measurement voltage value from the sensor when the condition determination module determines that the condition is satisfied, and set the threshold value based on the acquired measurement voltage value.

In some embodiments, the calibration module is configured to set the threshold value based on the measurement voltage value when the measurement voltage value acquired from the sensor is equal to or higher than a predetermined first voltage value. In other embodiments, the calibration module is configured to execute sheet feeding when the measurement voltage value acquired from the sensor is lower than a predetermined first voltage value, determine whether the sheet is present or absent based on variation of the measurement voltage value, and set the threshold value based on the measurement voltage value in accordance with a determination result. In preferred examples, an amount of the sheet feeding is 200 dot lines or more and 250 dot lines or less.

In certain embodiments, the calibration module is configured to set a registration completion flag after the setting of the threshold value, and wherein the condition determination module is configured to determine that the condition is not satisfied when the registration completion flag is set. In some embodiments, the condition is that the measurement voltage value is not stored in a storage unit.

In one aspect, there is provided a printer control method, including: executing calibration of setting a threshold value for a measurement voltage value of a sensor configured to detect whether a sheet is present or absent; and determining whether a condition for executing the calibration is satisfied, wherein the executing of the calibration includes acquiring the measurement voltage value from the sensor when it is determined that the condition is satisfied in the determining, and setting the threshold value based on the acquired measurement voltage value.

In one aspect, there is provided a program for causing a computer to execute: executing calibration of setting a threshold value for a measurement voltage value of a sensor configured to detect whether a sheet is present or absent; and determining whether a condition for executing the calibration is satisfied, wherein the executing of the calibration includes acquiring the measurement voltage value from the sensor when it is determined that the condition is satisfied in the determining, and setting the threshold value based on the acquired measurement voltage value.

These features allow the printer to automatically establish a stable detection threshold regardless of sheet reflectance, thereby improving sensor reliability and reducing calibration frequency.

### BRIEF DESCRIPTION OF THE DRAWINGS

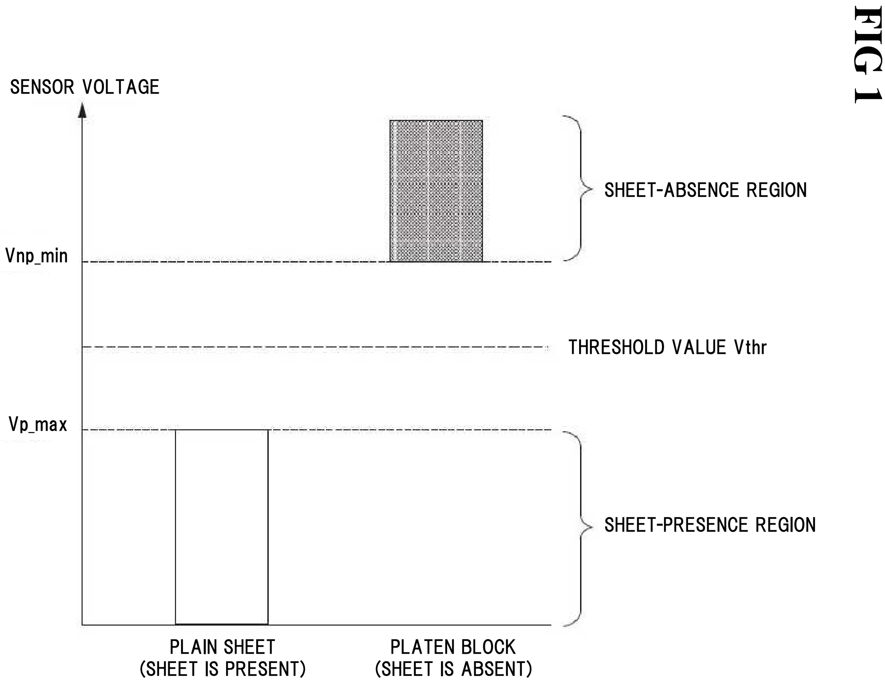

FIG. 1 is a graph for showing an example of a related-art relationship between a measurement voltage value of a sensor and a threshold value in a case of a plain sheet and a case of absence of a sheet.

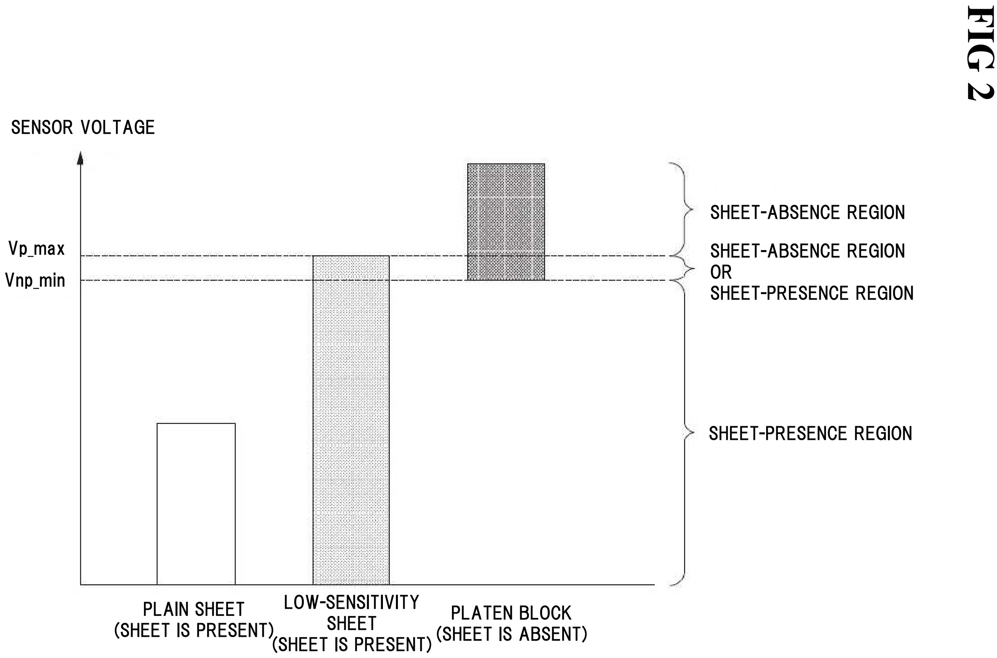

FIG. 2 is a graph for showing an example of a related-art relationship between the measurement voltage value of the sensor and the threshold value in the case of the plain sheet, in a case of a low-sensitivity sheet, and in the case of the absence of the sheet.
FIG. 3 is a view for illustrating an example of an exterior of a printer (1) according to at least one embodiment of the present invention.
FIG. 4 is a diagram for illustrating an example of a configuration of the printer (1) according to the at least one embodiment of the present invention.
FIG. 5 is a diagram for illustrating an example of a functional configuration of the printer (1) according to the at least one embodiment of the present invention.
FIG. 6 is a graph for showing an example of a relationship between a measurement voltage value for each of the plain sheet, the low-sensitivity sheet, and the platen block and the threshold value in the case of the absence of the sheet when sensitivity of a sheet detection sensor (61) in the at least one embodiment of the present invention is low.
FIG. 7 is a graph for showing an example of a relationship between the measurement voltage value for each of the plain sheet, the low-sensitivity sheet, and the platen block and the threshold value in the case of the absence of the sheet when the sensitivity of the sheet detection sensor (61) in the at least one embodiment of the present invention is high.
FIG. 8 is a graph for showing an example of a relationship between the measurement voltage value for each of the plain sheet, the low-sensitivity sheet, and the platen block and the threshold value in a case of presence of sheet when the sensitivity of the sheet detection sensor (61) in the at least one embodiment of the present invention is low.
FIG. 9 is a graph for showing an example of a relationship between the measurement voltage value for each of the plain sheet, the low-sensitivity sheet, and the platen block and the threshold value in the case of the presence of the sheet when the sensitivity of the sheet detection sensor (61) in the at least one embodiment of the present invention is high.
FIG. 10 is a table for showing an example of a method of setting the threshold value in the at least one embodiment of the present invention.
FIG. 11 is a flowchart for illustrating an example of a flow of power supply turn-on processing in the at least one embodiment of the present invention.
FIG. 12 is a flowchart for illustrating an example of a flow of error recovery wait processing in the at least one embodiment of the present invention.
FIG. 13 is a flowchart for illustrating an example of a flow of calibration processing in the at least one embodiment of the present invention.

### DESCRIPTION OF THE EMBODIMENTS

Now, at least one embodiment of the present invention is described in detail, by way of example only, with reference to the drawings.

The numerical values described herein, such as voltage thresholds and feeding lengths, are examples provided for explanatory purposes and do not limit the scope of the invention unless explicitly recited in the claims.

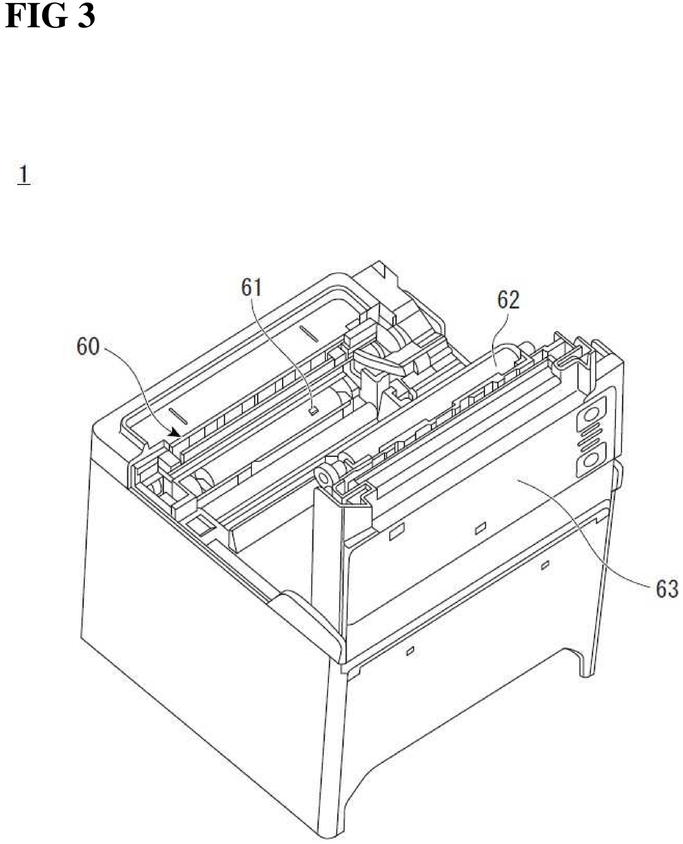

FIG. 3 is a view for illustrating an example of an exterior of a printer 1 according to the at least one embodiment. The printer 1 is a thermal printer. A sheet discharge portion 60 discharges a sheet printed by the printer 1 (that is, a printed heat-sensitive sheet) to the outside of the printer 1. A sheet detection sensor 61 detects whether a sheet is present or absent. The sheet detection sensor 61 is provided to the sheet discharge portion 60. The sheet detection sensor 61 is a photo interrupter. A platen block 62 presses the sheet to prevent the sheet from lifting. The platen block 62 is a member having a low reflectance.

In FIG. 3, a state in which a storage cover 63 is open is illustrated. The printing is executed under a state in which the storage cover 63 is closed. When the storage cover 63 is closed, the platen block 62 is moved to a position opposing the sheet detection sensor 61.

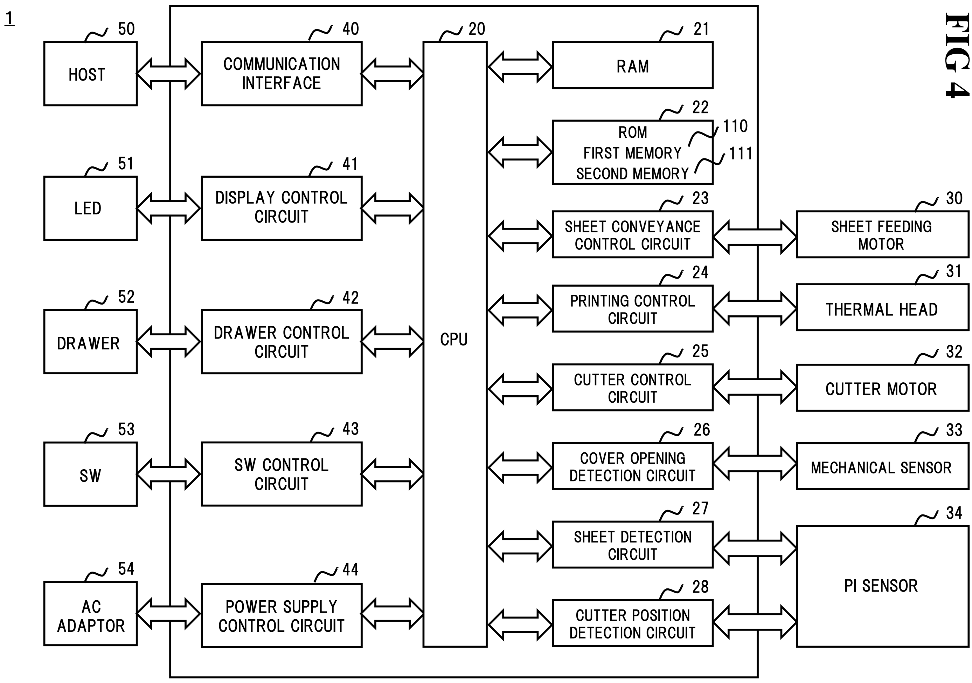

FIG. 4 is a diagram for illustrating an example of a configuration of the printer 1 according to the at least one embodiment. The printer 1 includes a central processing unit (CPU) 20, a random access memory (RAM) 21, a read only memory (ROM) 22, a sheet conveyance control circuit 23, a printing control circuit 24, a cutter control circuit 25, a cover opening detection circuit 26, a sheet detection circuit 27, a cutter position detection circuit 28, a sheet feeding motor 30, a thermal head 31, a cutter motor 32, a mechanical sensor 33, a photo interrupter sensor 34, an LED 51, a drawer 52, a switch 53, and an AC adaptor 54.

The CPU 20 executes various types of control for the printer 1. The RAM 21 and the ROM 22 store various types of information. The ROM 22 includes a first memory 110 and a second memory 111. The first memory 110 and the second memory 111 are described later.

The sheet conveyance control circuit 23 controls the sheet feeding motor 30. The printing control circuit 24 controls the thermal head 31. The cutter control circuit 25 controls the cutter motor 32. The cover opening detection circuit 26 uses the mechanical sensor 33 to detect whether the storage cover 63 is open or closed. The sheet detection circuit 27 uses the photo interrupter sensor 34 to detect whether the sheet is present or absent. The photo interrupter sensor 34 includes the above-mentioned sheet detection sensor 61. The cutter position detection circuit 28 uses the photo interrupter sensor 34 to detect a cutter position which is a cut position of the sheet.

A communication interface 40 communicates to and from a host 50. The printer 1 receives print data from the host 50 via the communication interface 40. A display control circuit 41 controls the LED 51. A drawer control circuit 42 controls the drawer 52. A switch control circuit 43 controls the switch 53. A power supply control circuit 44 controls the AC adaptor 54.

### [Functional Configuration of Printer 1]

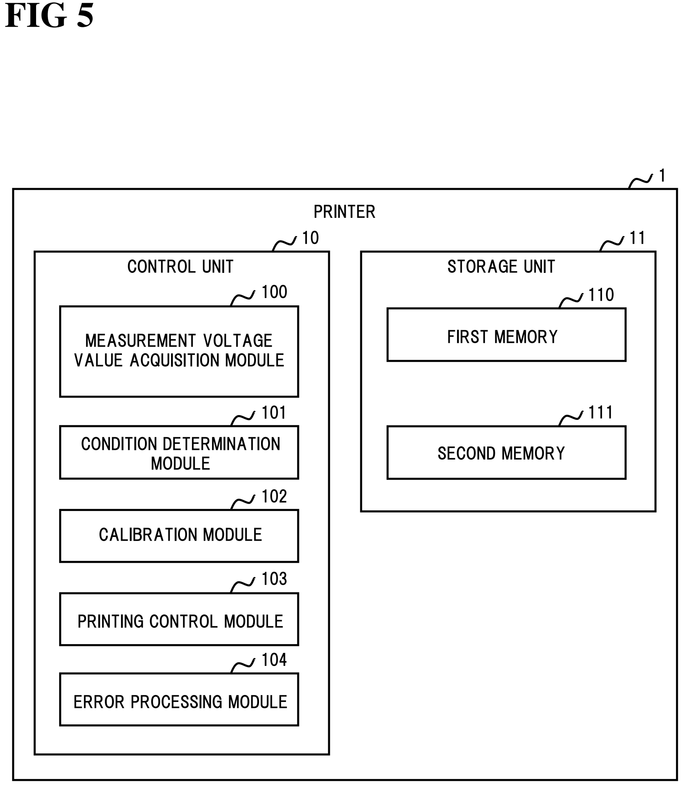

FIG. 5 is a diagram for illustrating an example of a functional configuration of the printer 1 according to the at least one embodiment. The printer 1 includes a control unit 10 and a storage unit 11.

The control unit 10 includes a measurement voltage value acquisition module 100, a condition determination module 101, a calibration module 102, a printing control module 103, and an error processing module 104. Each of those function modules is implemented by, for example, the CPU 20 loading a program read from the ROM 22 onto the RAM 21 and executing processing in accordance with the program.

The measurement voltage value acquisition module 100 acquires a measurement voltage value of the sheet detection sensor 61. The measurement voltage value acquisition module 100 acquires the measurement voltage value of the sheet detection sensor 61 via the sheet detection circuit 27. The measurement voltage value of the sheet detection sensor 61 is also referred to as "sensor voltage."

The condition determination module 101 determines whether or not a condition for executing calibration is satisfied. The calibration is processing of setting a threshold value for the measurement voltage value of the sheet detection sensor 61. The condition for executing the calibration is, as an example, that the power supply is turned on or that a state of waiting for recovery from an error occurs and the measurement voltage value is not registered in any of the first memory 110 and the second memory 111.

The calibration module 102 acquires the measurement voltage value from the sheet detection sensor 61 when the condition determination module 101 determines that the condition for executing the calibration is satisfied, and sets the threshold value for the measurement voltage value of the sheet detection sensor 61 based on the acquired measurement voltage value.

The printing control module 103 controls the printing via the printing control circuit 24.

The error processing module 104 executes error processing in a case in which one of various errors occurs.

The storage unit 11 stores various types of information. The storage unit 11 includes the RAM 21 and the ROM 22. The storage unit 11 includes the first memory 110 and the second memory 111.

In the first memory 110, a sheet-absence voltage value is registered. The sheet-absence voltage value is the measurement voltage value measured by the sheet detection sensor 61 when the sheet is absent.

In the second memory 111, a sheet-presence voltage value is registered. The sheet-presence voltage value is the measurement voltage value measured by the sheet detection sensor 61 when the sheet is present.

At the time when the power supply for the printer 1 is turned on for the first time such as the time of delivery from a factory, the measurement voltage value is not registered in any of the first memory 110 and the second memory 111.

In the following description, the threshold value for the measurement voltage value of the sheet detection sensor 61 is sometimes simply referred to as "threshold value."

### [Overview of Automatic Calibration]

In the printer 1, the calibration is automatically executed when the power supply is turned on or when the state of waiting for recovery from an error (such as a sheet-absence error) occurs. In this calibration, the voltage value of the sheet detection sensor 61 is measured. In the printer 1, it is determined whether or not the measurement voltage value obtained as a result of the calibration is within a predetermined voltage range (sheet-absence voltage value). When the measurement voltage value is within the predetermined voltage range, this measurement voltage value is registered in the first memory 110. When the measurement voltage value has already been registered in the first memory 110, the calibration is not executed. The threshold value is set based on the measurement voltage value registered in the first memory 110.

### [Method of Setting Threshold Value]

Description is now given of an overview of a method of setting the threshold value for the measurement voltage value in the calibration. In the at least one embodiment, when the sheet is absent, the sheet-absence voltage value is registered in the first memory 110, the threshold value is determined, and the calibration is not subsequently executed. In contrast, when the sheet is present, the sheet-presence voltage value is registered in the second memory 111, and a preliminary value is calculated as the threshold value. When the preliminary value is calculated as the threshold value, the calibration is executed when the power supply is turned on the next time or when it is determined that the sheet is absent.

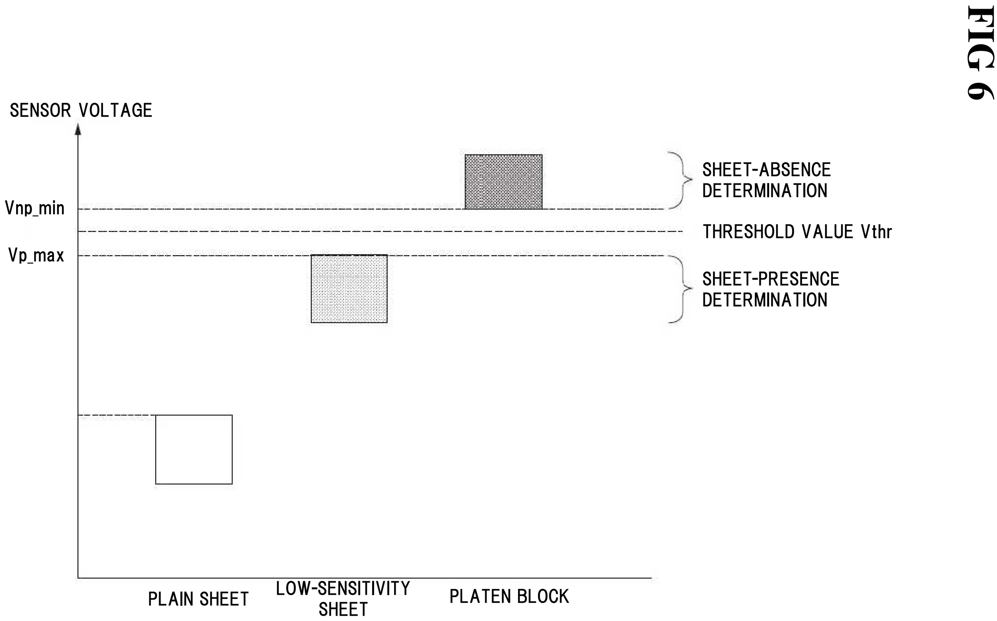

With reference to FIG. 6 to FIG. 9, description is now given of a relationship between the measurement voltage value obtained by the sheet detection sensor 61 for each of a plain sheet, a low-sensitivity sheet, and the platen block (that is, the absence of the sheet) and the threshold value. In the following, the relationship between the measurement voltage value and the threshold value is described for each of a case in which the sensitivity of the sheet detection sensor 61 is low and a case in which the sensitivity thereof is high. The sensitivity of the sheet detection sensor 61 varies in accordance with a model of the printer 1, or varies from one printer 1 to another.

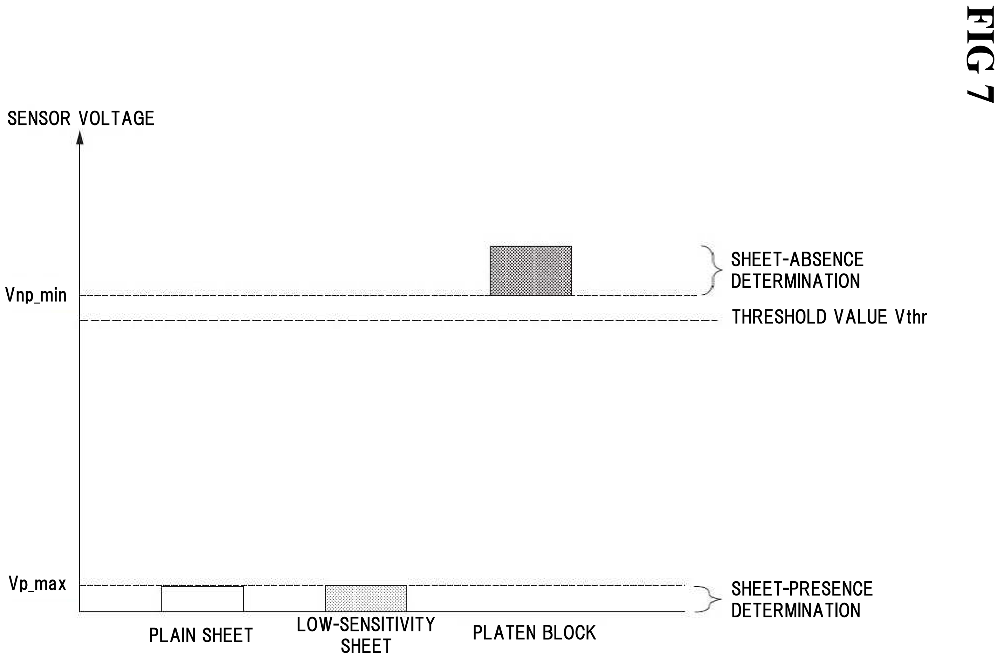

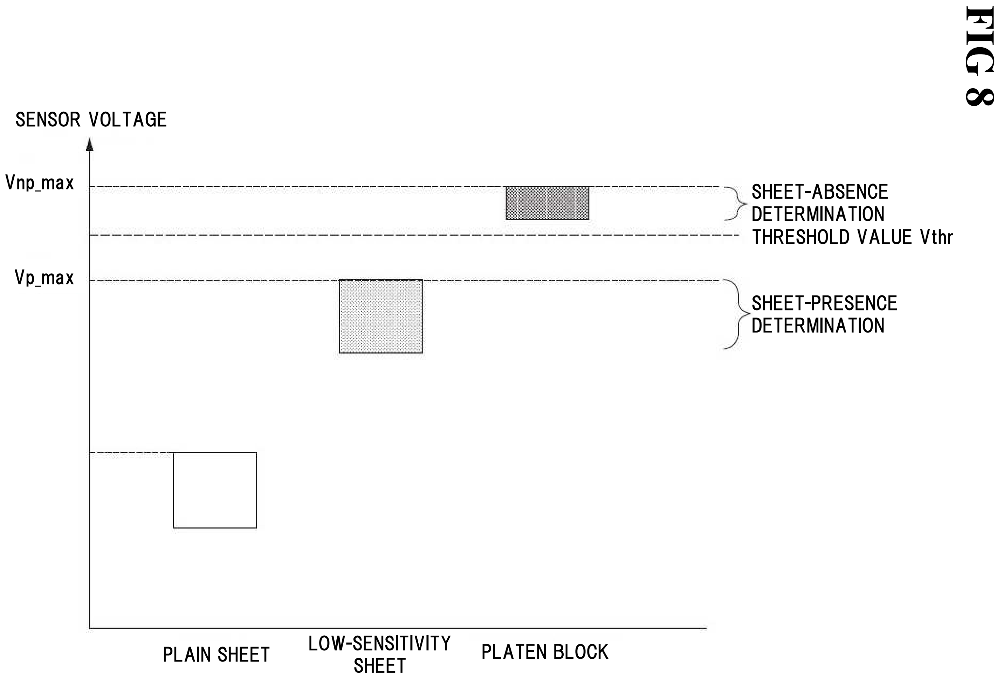

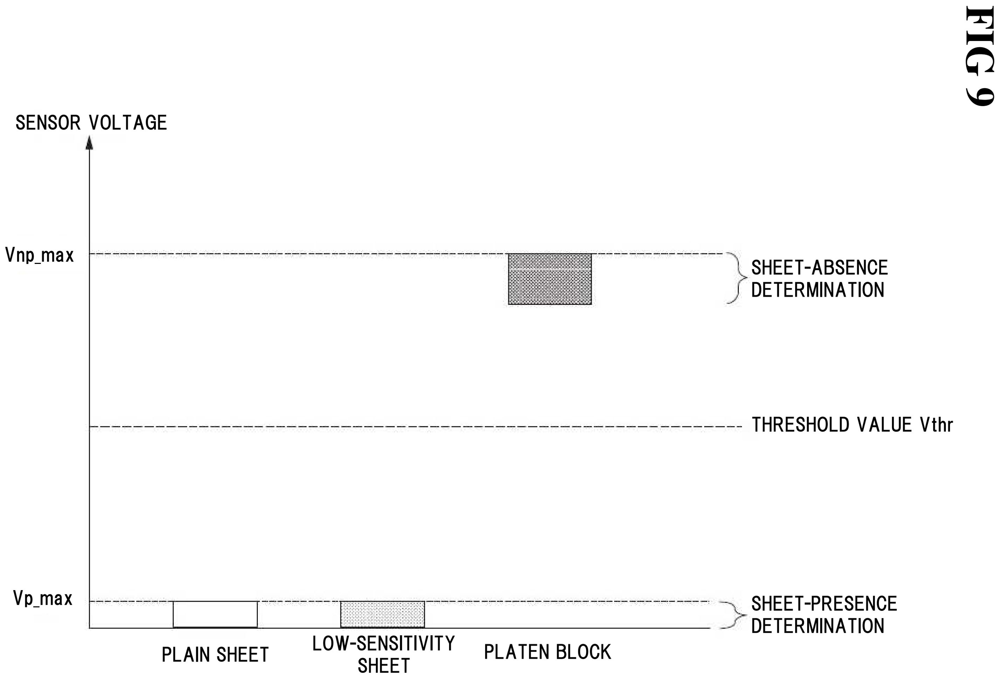

FIG. 6 is a graph for showing an example of the relationship between the measurement voltage value for each of the plain sheet, the low-sensitivity sheet, and the platen block and the threshold value in the case of the absence of the sheet when the sensitivity of the sheet detection sensor 61 is low. FIG. 7 is a graph for showing an example of the relationship between the measurement voltage value for each of the plain sheet, the low-sensitivity sheet, and the platen block and the threshold value in the case of the absence of the sheet when the sensitivity of the sheet detection sensor 61 is high. FIG. 8 is a graph for showing an example of the relationship between the measurement voltage value for each of the plain sheet, the low-sensitivity sheet, and the platen block and the threshold value in the case of the presence of the sheet when the sensitivity of the sheet detection sensor 61 is low. FIG. 9 is a graph for showing an example of the relationship between the measurement voltage value for each of the plain sheet, the low-sensitivity sheet, and the platen block and the threshold value in the case of the presence of the sheet when the sensitivity of the sheet detection sensor 61 is high.

When the measurement voltage values (FIG. 6 and FIG. 8) in the case in which the sensitivity of the sheet detection sensor 61 is low and the measurement voltage values (FIG. 7 and FIG. 9) in the case in which the sensitivity of the sheet detection sensor 61 is high are compared with each other, the measurement voltage values tend to be lower in the case in which the sensitivity of the sheet detection sensor 61 is high. Thus, as the sensitivity of the sheet detection sensor 61 becomes higher, the determination that the sheet is present is more likely to be made.

The threshold value is set such that the absence of the sheet and the low-sensitivity sheet can be discriminated from each other. The measurement voltage value for the plain sheet is equal to or lower than the measurement voltage value for the low-sensitivity sheet, and hence when a threshold value can discriminate the absence of the sheet and the low-sensitivity sheet from each other, this threshold value can distinguish the absence of the sheet and the plain sheet.

The threshold value Vthr in the case of the absence of the sheet (FIG. 6 or FIG. 7) is set between a sheet-presence maximum value Vp_max and a sheet-absence minimum value Vnp_min regardless of the sensitivity of the sheet detection sensor 61. In contrast, the threshold value Vthr in the case of the presence of the sheet (FIG. 8 or FIG. 9) is set between the sheet-presence maximum value Vp_max and a sheet-absence maximum value Vnp_max regardless of the sensitivity of the sheet detection sensor 61.

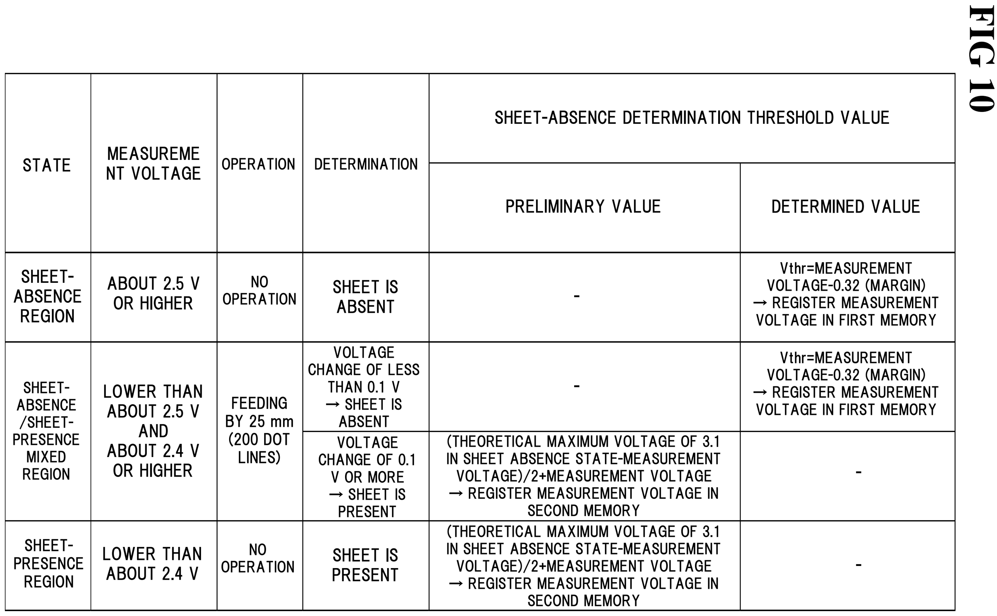

Details of the method of setting the threshold value are now described. FIG. 10 is a table for showing an example of the method of setting the threshold value in the at least one embodiment. When the measurement voltage value is 2.5 V or higher, it is determined that the sheet is absent, and the sheet-absence voltage value Vnp is registered in the first memory 110. The sheet-absence voltage value Vnp is the measurement voltage value in the case of the absence of the sheet. The threshold value Vthr is calculated based on Expression (1). $Vthr = Vnp - m$

The value "m" is set in accordance with the model of the printer 1. In the example in the at least one embodiment, the value "m" is 0.3.

When the measurement voltage value is lower than 2.5 V and 2.4 V or higher, it is not possible to determine whether the sheet is absent or present, and hence the sheet feeding is executed by 200 dot lines. When the difference between the maximum value and the minimum value of the measurement voltage value is less than 0.1 V, it is determined that the sheet is absent, and the measurement voltage value is registered in the first memory 110. The threshold value Vthr is calculated based on Expression (1).

In contrast, when the difference between the maximum value and the minimum value of the measurement voltage value is 0.1 V or more, it is determined that the sheet is present, and the threshold value Vthr is calculated based on Expression (2). $Vthr = \left(Vnp_max-Vp\right) / 2 + Vp$

In Expression (2), a value of the sheet-absence maximum value Vnp_max is 3.1 V as an example. The sheet-presence voltage value Vp is the measurement voltage value in the case of the presence of the sheet. The sheet-presence voltage value Vp is registered in the second memory 111.

When the measurement voltage value is lower than 2.4 V, it is determined that the sheet is present, and the threshold value Vthr is calculated based on Expression (2). The sheet-presence voltage value Vp is registered in the second memory 111.

### [Flows of Various Types of Processing by Printer 1]

Description is now given of power supply turn-on processing and error recovery wait processing among various types of processing executed by the printer 1. The power supply turn-on processing is executed, for example, under the state in which no sheet is set in the inspection at the time of factory delivery of the printer 1. The error recovery wait processing is executed, for example, after the user has started to use the printer 1, and hence the error recovery wait processing is executed in any one of the case in which the sheet is set and the case in which the sheet is not set.

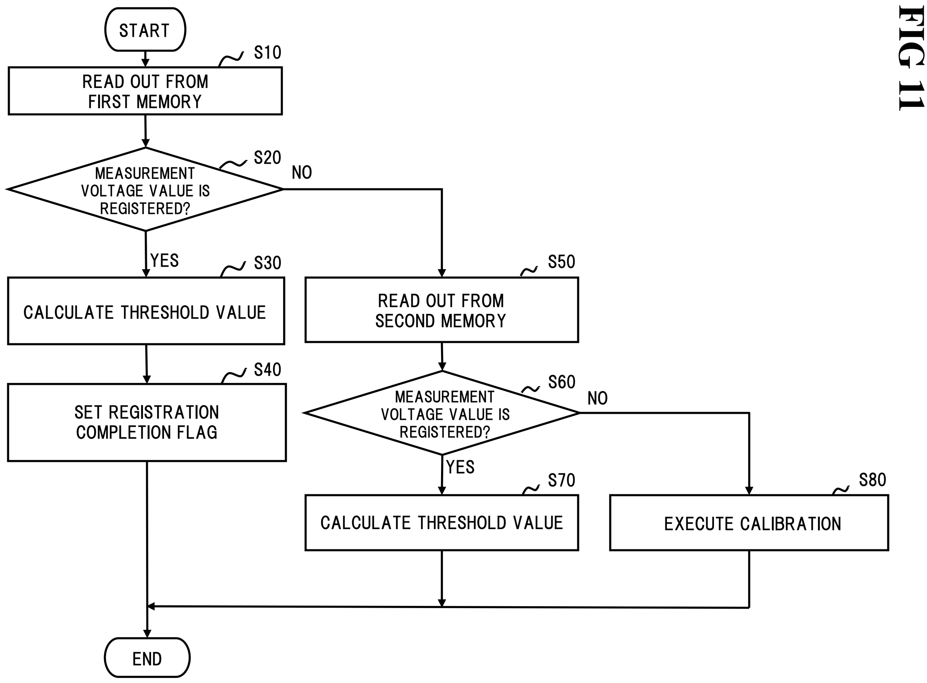

The steps shown in FIG. 11-13 are illustrative. The processing order and subdivision may vary, and additional or alternative steps may be used.

FIG. 11 is a flowchart for illustrating an example of a flow of the power supply turn-on processing in the at least one embodiment. The power supply turn-on processing is executed by the control unit 10 immediately after the power is supplied to the printer 1 and the printer 1 is started.

Step S10: The condition determination module 101 reads out the measurement voltage value from the first memory 110.

Step S20: The condition determination module 101 determines whether or not the measurement voltage value is registered in the first memory 110. This measurement voltage value is the sheet-absence voltage value. When the condition determination module 101 determines that the measurement voltage value is registered in the first memory 110 (YES in Step S20), the control unit 10 executes a processing step of Step S30. In contrast, when the condition determination module 101 determines that the measurement voltage value is not registered in the first memory 110 (NO in Step S20), the control unit 10 executes a processing step of Step S50.

Step S30: The calibration module 102 calculates the threshold value. The calibration module 102 calculates the threshold value from the sheet-absence voltage value registered in the first memory 110 based on Expression (1). The calibration module 102 registers the calculated threshold value in the storage unit 11. The threshold value registered in the storage unit 11 is used by the sheet detection circuit 27 to detect whether the sheet is present or absent.

Step S40: The calibration module 102 sets a registration completion flag. That is, the calibration module 102 sets the registration completion flag after the setting of the threshold value. After that, the control unit 10 finishes the power supply turn-on processing.

Step S50: The condition determination module 101 reads out the measurement voltage value from the second memory 111.

Step S60: The condition determination module 101 determines whether or not the measurement voltage value is registered in the second memory 111. This measurement voltage value is the sheet-presence voltage value. When the condition determination module 101 determines that the measurement voltage value is registered in the second memory 111 (YES in Step S60), the control unit 10 executes a processing step of Step S70. In contrast, when the condition determination module 101 determines that the measurement voltage value is not registered in the second memory 111 (NO in Step S60), the control unit 10 executes a processing step of Step S80.

Step S70: The calibration module 102 calculates the threshold value. The calibration module 102 calculates the threshold value from the sheet-presence voltage value registered in the second memory 111 based on Expression (2). The calibration module 102 registers the calculated threshold value in the storage unit 11. The threshold value registered in the storage unit 11 is used by the sheet detection circuit 27 to detect whether the sheet is present or absent. However, the threshold value that is set based on the sheet-presence voltage value is a preliminary value, and is possibly updated through the subsequent calibration. After that, the control unit 10 finishes the power supply turn-on processing.

Step S80: The calibration module 102 executes calibration processing. Details of the calibration processing are described later. After that, the control unit 10 finishes the power supply turn-on processing.

This is the end of the power supply turn-on processing executed by the control unit 10.

As described above, in the power supply turn-on processing, when it is determined that the measurement voltage value is not registered in the first memory 110 in Step S20, and it is determined that the measurement voltage value is not registered in the second memory 111 in Step S60, the calibration processing of Step S180 is executed. Thus, a condition for executing the calibration determined by the condition determination module 101 is, as an example, that the measurement voltage value obtained by the sheet detection sensor 61 is not stored in the storage unit 11.

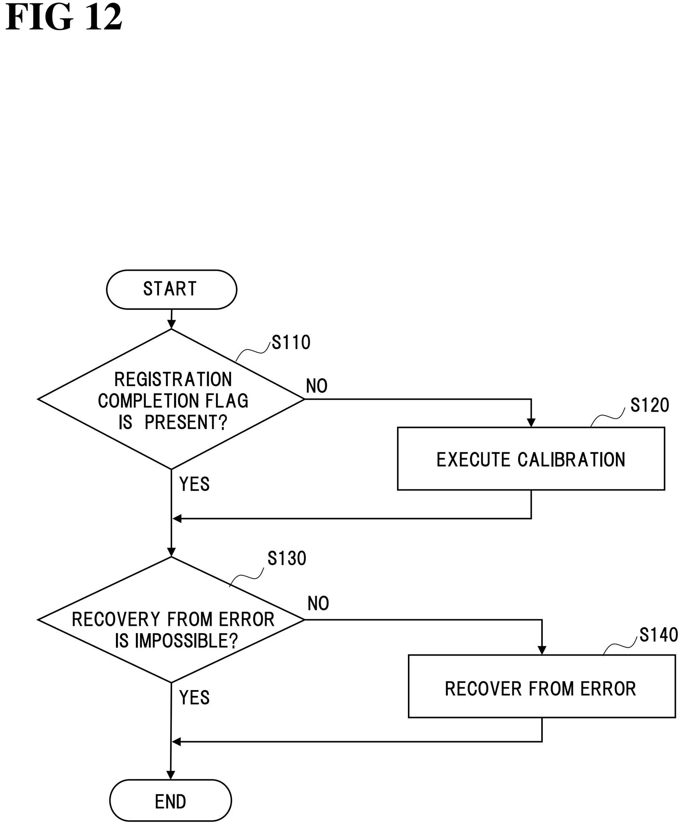

FIG. 12 is a flowchart for illustrating an example of a flow of the error recovery wait processing in the at least one embodiment. The error recovery wait processing is executed when one of various errors is detected in the printer 1. The various errors include, for example, such a sheet-absence error that, even when a printing command is received from the host 50, a sheet is determined to be absent and hence the printing cannot be executed.

Step S110: The condition determination module 101 determines whether or not the registration completion flag is set. When the condition determination module 101 determines that the registration completion flag is set (YES in Step S110), the control unit 10 executes a processing step of Step S130. In contrast, when the condition determination module 101 determines that the registration completion flag is not set (NO in Step S110), the control unit 10 executes a processing step of Step S120.

Step S120: The calibration module 102 executes the calibration processing. Details of the calibration processing are described later.

Step S130: The error processing module 104 determines whether or not recovery from the error is impossible. When the error processing module 104 determines that the recovery from the error is impossible (YES in Step S130), the control unit 10 finishes the error recovery wait processing. In contrast, when the error processing module 104 determines that the recovery from the error is possible (NO in Step S130), the control unit 10 executes a processing step of Step S140.

Step S140: The error processing module 104 executes various types of processing for the error recovery. After that, the control unit 10 finishes the error recovery wait processing.

This is the end of the error recovery wait processing executed by the control unit 10.

As described above, in the error recovery wait processing, when it is determined that the registration completion flag is set in Step S110, the calibration processing of Step S120 is not executed. Thus, when the registration completion flag is set, the condition determination module 101 determines that the condition for executing the calibration is not satisfied. As a result, it is possible to prevent the threshold value from being registered in the storage unit 11 more than a required number of times. Thus, it is possible to extend a service life of the memory forming the storage unit 11.

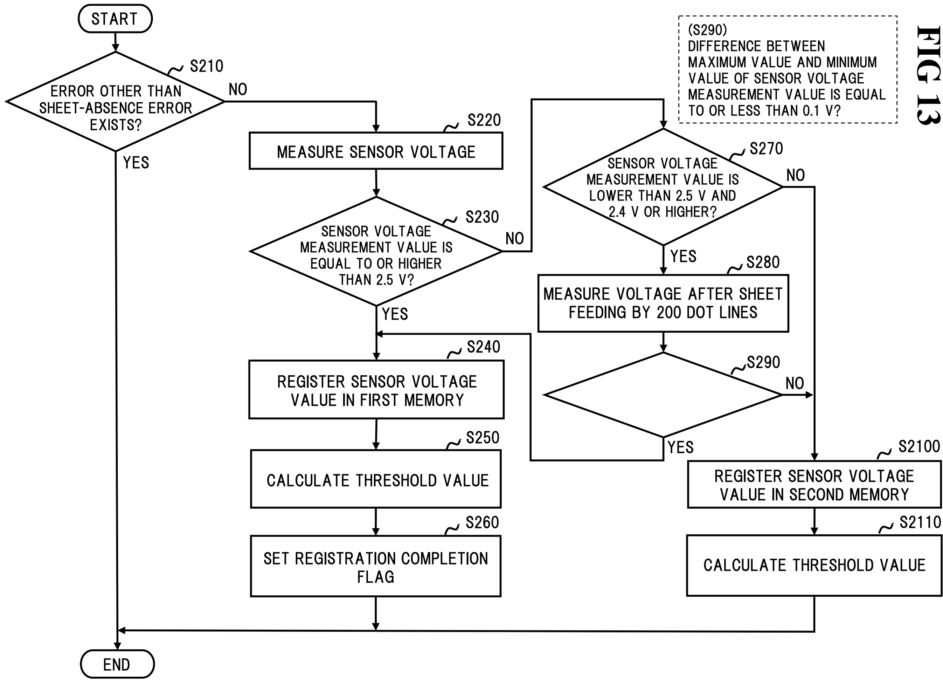

FIG. 13 is a flowchart for illustrating an example of a flow of the calibrating processing in the at least one embodiment. The calibration processing illustrated in FIG. 13 is executed in Step S80 of the power supply turn-on processing (FIG. 11) or Step S120 of the error recovery wait processing (FIG. 12).

Step S210: The calibration module 102 determines whether or not an error other than the sheet-absence error occurs. The calibration module 102 acquires information on the error from the error processing module 104 to make this determination. When the calibration module 102 determines that an error other than the sheet-absence error occurs (YES in Step S210), the calibration module 102 finishes the calibration processing. In contrast, when the calibration module 102 determines that an error other than the sheet-absence error does not occur (NO in Step S210), the calibration module 102 executes a processing step of Step S220.

Step S220: The calibration module 102 causes the sheet detection sensor 61 to measure the voltage value. The calibration module 102 acquires the measurement voltage value of the sheet detection sensor 61 via the measurement voltage value acquisition module 100. This measurement voltage value is the voltage value measured by the sheet detection sensor 61 immediately after the processing step of Step S220 is started.

Step S230: The calibration module 102 determines whether or not the measurement voltage value acquired from the sheet detection sensor 61 is equal to or higher than a predetermined first voltage value. The first voltage value is, as an example, 2.5 V. The state in which this measurement voltage value is equal to or higher than the first voltage value (2.5 V) corresponds to the sheet absence. Thus, this measurement voltage value is the sheet-absence voltage value.

When the calibration module 102 determines that this measurement voltage value is equal to or higher than the first voltage value (YES in Step S230), the calibration module 102 executes a processing step of Step S240. In contrast, when the calibration module 102 determines that this measurement voltage value is lower than the first voltage value (NO in Step S230), the calibration module 102 executes a processing step of Step S270.

Step S240: The calibration module 102 registers the measurement voltage value acquired from the measurement voltage value acquisition module 100 in the first memory 110.

Step S250: The calibration module 102 calculates the threshold value based on the measurement voltage value acquired from the measurement voltage value acquisition module 100. This measurement voltage value is the sheet-absence voltage value. In response thereto, the calibration module 102 calculates the threshold value based on Expression (1). The calibration module 102 registers the calculated threshold value in the storage unit 11. The threshold value registered in the storage unit 11 is used by the sheet detection circuit 27 to detect whether the sheet is present or absent. Thus, when the measurement voltage value acquired from the sheet detection sensor 61 is equal to or higher than the predetermined first voltage value, the calibration module 102 sets the threshold value based on this measurement voltage value.

Step S260: The calibration module 102 sets the registration completion flag. That is, the calibration module 102 sets the registration completion flag after the setting of the threshold value. After that, the calibration module 102 finishes the calibration processing.

Step S270: The calibration module 102 determines whether or not the measurement voltage value acquired from the sheet detection sensor 61 is lower than the first voltage value and this measurement voltage value is equal to or higher than the second voltage value. The second voltage value is, as an example, 2.4 V. The state in which this measurement voltage value is lower than the first voltage value (2.5 V) and is equal to or higher than the second voltage value (2.4 V) corresponds to both of the case of the absence of the sheet and the case of the presence of the sheet, and hence it is difficult to determine, based on only this measurement voltage value, whether this state is the case of the absence of the sheet or the case of the presence of the sheet.

When the calibration module 102 determines that the measurement voltage value acquired from the sheet detection sensor 61 is lower than the first voltage value and this measurement voltage value is equal to or higher than the second voltage value (YES in Step S270), the calibration module 102 executes a processing step of Step S280. In contrast, when the calibration module 102 determines that the measurement voltage value acquired from the sheet detection sensor 61 is equal to or higher than the first voltage value or this measurement voltage value is lower than the second voltage value (NO in Step S270), the calibration module 102 executes a processing step of Step S2100.

Step S280: The calibration module 102 executes the sheet feeding, and causes the sheet detection sensor 61 to measure the voltage value. An amount of this sheet feeding is, as an example, 200 dot lines but any suitable number of dot lines may be used. The 200 dot lines are sufficient for discriminating the sheet presence and the sheet absence from each other. By way of further example, this amount of the sheet feeding may be 200 dot lines or more and 250 dot lines or less. In order to avoid wasting the sheet, it is not preferred for the sheet to be fed by 250 dot lines or more.

Step S290: The calibration module 102 determines whether or not a variation in the measurement voltage value in the process of the sheet feeding falls within a predetermined range. The variation in the measurement voltage value in the process of the sheet feeding is the difference between the maximum value of the measurement voltage value in the process of the sheet feeding and the minimum value of the measurement voltage value in the process of the sheet feeding. The predetermined range is, as an example, 0.1 V or narrower.

Here, when the sheet is absent, only reflected light from a surface of the platen block 62 having a constant reflectance is detected, and hence the measurement voltage value obtained by the sheet detection sensor 61 falls within the predetermined range. In contrast, when the sheet is present, the measurement voltage value obtained by the sheet detection sensor 61 is outside the predetermined range due to minute recesses and protrusions of the surface of the sheet in the process of the sheet feeding.

When the calibration module 102 determines that the variation of the measurement voltage value in the process of the sheet feeding falls within the predetermined range (YES in Step S290), the calibration module 102 executes the processing step of Step S240. In contrast, when the calibration module 102 determines that the variation of the measurement voltage value in the process of the sheet feeding is outside the predetermined range (NO in Step S290), the calibration module 102 executes the processing step of Step S2100.

Step S2100: The calibration module 102 registers the measurement voltage value acquired from the measurement voltage value acquisition module 100 in the second memory 111.

Step S2110: The calibration module 102 calculates the threshold value based on the measurement voltage value acquired from the measurement voltage value acquisition module 100. This measurement voltage value is the sheet-presence voltage value. In response thereto, the calibration module 102 calculates the threshold value based on Expression (2). The calibration module 102 registers the calculated threshold value in the storage unit 11. The threshold value registered in the storage unit 11 is used by the sheet detection circuit 27 to detect whether the sheet is present or absent.

Thus, the calibration module 102 executes the sheet feeding when the measurement voltage value acquired from the sheet detection sensor 61 is lower than the predetermined first voltage value, determines the sheet presence or the sheet absence based on the variation of the measurement voltage value, and sets the threshold value based on the measurement voltage value in accordance with the determination result.

The threshold value set based on the sheet-presence voltage value is a preliminary value, and is possibly updated through the subsequent calibration. After that, the calibration module 102 finishes the calibration processing.

This is the end of the calibration processing executed by the calibration module 102.

With the above-mentioned power supply turn-on processing (FIG. 11), error recovery wait processing (FIG. 12), and calibration processing (FIG. 13), the measurement voltage value is registered in the first memory 110 in only the case of the absence of the sheet, and the measurement voltage value is registered in the second memory 111 in the case of the presence of the sheet. The registration completion flag is set only when the threshold value calculated based on the sheet-absence voltage value under the state in which the measurement voltage value is registered in the first memory 110 is set. The registration completion flag is not set even when the threshold value calculated based on the sheet-presence voltage value under the state in which the measurement voltage value is not registered in the first memory 110 is set. When the registration completion flag is not set, the set threshold value is a preliminary value, and is possibly updated through the execution of calibration in the subsequent processing.

Thus, the threshold value finally set is a threshold value calculated based on the sheet-absence voltage value. That is, the threshold value finally determined is the voltage value calculated based on the sheet-absence voltage value considered as a reference. When the sheet-presence voltage value is considered as the reference, the threshold value is likely to change depending on the type of sheet. In the at least one embodiment, the sheet-absence voltage value is considered as the reference, and hence it is possible to set the threshold value independently of the type of sheet.

In the above-mentioned calibration processing, the processing step of Step S270 may be omitted. That is, the calibration module 102 may execute the sheet feeding when the measurement voltage value acquired from the sheet detection sensor 61 is lower than the predetermined first voltage value to determine whether the sheet is present or absent based on the variation of this measurement voltage value, and set the threshold value based on this measurement voltage value in accordance with a determination result. However, as in the above-mentioned calibration processing, the waste of the sheet caused by unnecessary feeding of the sheet for setting the threshold value can be suppressed by determining whether or not the measurement voltage value is lower than the first voltage value and this measurement voltage value is equal to or higher than the second voltage value through the processing step of Step S270, and determining whether or not the sheet is to be fed in accordance with the determination result.

In the at least one embodiment, description has been given of the example of the case in which the first memory 110 and the second memory 111 are provided to the storage unit 11, the sheet-absence voltage value is registered in the first memory 110, and the sheet-presence voltage value is registered in the second memory 111, but the configuration is not limited to this example. The first memory 110 and the second memory 111 may be omitted from the storage unit 11. In this case, in the storage unit 11, together with the measurement voltage value, a flag indicating whether this measurement voltage value is the sheet-absence voltage value or the sheet-presence voltage value is registered. With this configuration as well, it is possible to determine whether the sheet-absence voltage value is registered, or the sheet-presence voltage value is registered.

As described above, the printer 1 according to the at least one embodiment includes the condition determination module 101 and the calibration module 102.

The condition determination module 101 determines whether or not the condition for executing the calibration for setting the threshold value for the measurement voltage value of the sensor (sheet detection sensor 61 in the at least one embodiment) which detects whether the sheet is present or absent is satisfied.

The calibration module 102 acquires the measurement voltage value from the sensor (sheet detection sensor 61 in the at least one embodiment) when the condition determination module 101 determines that this condition is satisfied, and sets the threshold value based on the acquired measurement voltage value.

With this configuration, in the printer 1 according to the at least one embodiment, the calibration is automatically executed when the condition for executing the calibration is satisfied, and hence it is possible to reduce the labor spent on the calibration for the threshold value for the measurement voltage value of the sheet detection sensor. The labor spent on the calibration is, for example, a change of a component such as the switch and labor spent by the user. In the printer 1 according to the at least one embodiment, it is possible to determine whether the sheet is present or absent regardless of the type of sheet (plain sheet or low-sensitivity sheet) that is set. Moreover, in the printer 1 according to the at least one embodiment, when the calibration is once executed in the sheet-absence state, the subsequent calibration is not required.

In the above, the at least one embodiment of the present invention has been described in detail with reference to the accompanying drawings. However, specific configurations of the present invention are not limited to those of the at least one embodiment and encompass design modifications and the like without departing from the scope of the present invention as defined by the appended claims.

For example, a computer program for implementing the functions of each of the above-mentioned devices may be recorded on a computer-readable recording medium, and the program recorded on the recording medium may be read into a computer system and executed. The term "computer system" as used herein may encompass OSs as well as peripheral equipment and other types of hardware.

The term "computer-readable recording medium" refers to a writable non-volatile memory such as a flexible disk, a magneto-optical disc, a ROM, and a flash memory, a portable medium such as a digital versatile disc (DVD), or a storage device such as a hard disk drive built in a computer system.

The term "computer-readable recording medium" also encompasses what holds a program for a given period of time, such as a volatile memory (such as a dynamic random access memory (DRAM)) inside a computer system that serves as a server or a client when a program is transmitted over the Internet or a similar network or via a telephone line or a similar communication line.

The program described above may be transmitted from a computer system in which the program is stored in a storage device or the like to another computer system via a transmission medium or on transmission waves in a transmission medium. The term "transmission medium" through which the program is transmitted as used herein refers to a medium having a function of transmitting information, such as the Internet or a similar network (a communication network), or a telephone line or a similar communication line (a communication wire).

The program described above may also be a program for implementing some of the functions described above. The program described above may also be what is called a differential file (a differential program), with which the functions described above can be implemented by being used in combination with a program already recorded in the computer system.

## Claims

1. A printer (1), comprising:
a calibration module (102) configured to execute calibration of setting a threshold value for a measurement voltage value of a sensor configured to detect whether a sheet is present or absent; and
a condition determination module (101) configured to determine whether a condition for executing the calibration is satisfied,
wherein the calibration module (102) is configured to acquire the measurement voltage value from the sensor when the condition determination module (101) determines that the condition is satisfied, and set the threshold value based on the acquired measurement voltage value.

2. The printer according to claim 1, wherein the calibration module (102) is configured to set the threshold value based on the measurement voltage value when the measurement voltage value acquired from the sensor is equal to or higher than a predetermined first voltage value.

3. The printer according to claim 1 or claim 2, wherein the calibration module (102) is configured to execute sheet feeding when the measurement voltage value acquired from the sensor is lower than a predetermined first voltage value, determine whether the sheet is present or absent based on variation of the measurement voltage value, and set the threshold value based on the measurement voltage value in accordance with a determination result.

4. The printer according to claim 1 or claim 2, wherein the calibration module (102) is configured to execute sheet feeding when the measurement voltage value acquired from the sensor is lower than a predetermined first voltage value and the measurement voltage value is equal to or higher than a predetermined second voltage value, determine whether the sheet is present or absent based on variation of the measurement voltage value, and set the threshold value based on the measurement voltage value in accordance with a determination result.

5. The printer according to claim 3 or claim 4, wherein an amount of the sheet feeding is 200 dot lines or more and 250 dot lines or less.

6. The printer according to any one of the preceding claims,
wherein the calibration module (102) is configured to set a registration completion flag after the setting of the threshold value, and
wherein the condition determination module (101) is configured to determine that the condition is not satisfied when the registration completion flag is set.

7. The printer according to any one of the preceding claims, wherein the condition is that the measurement voltage value is not stored in a storage unit.

8. A printer control method, comprising:
executing calibration of setting a threshold value for a measurement voltage value of a sensor configured to detect whether a sheet is present or absent (S80; S120); and
determining whether a condition for executing the calibration is satisfied (S20, S60; S110),
wherein the executing of the calibration includes acquiring the measurement voltage value from the sensor when it is determined that the condition is satisfied in the determining (S220), and setting the threshold value based on the acquired measurement voltage value (S250, S2110).

9. A program for causing a computer to execute:
executing calibration of setting a threshold value for a measurement voltage value of a sensor configured to detect whether a sheet is present or absent (S80; S120); and
determining whether a condition for executing the calibration is satisfied (S20, S60; S110),
wherein the executing of the calibration includes acquiring the measurement voltage value from the sensor when it is determined that the condition is satisfied in the determining (S220), and setting the threshold value based on the acquired measurement voltage value (S250, S2110).
